# EUROPEAN PATENT APPLICATION

(11) **EP 4 618 570 A1**
(43) Date of publication of application: **17.09.2025**
(21) Application number: 25162838.4
(22) Date of filing: 11.03.2025
(51) Int. Cl.: H04N 23/51, G03B 17/55, G03B 17/56

(54) **MULTI-CAMERA ASSEMBLY**

(30) Priority: 11.03.2024 KR 20240033937
(71) Applicant: Hanwha Vision Co., Ltd., Seongnam-si, Gyeonggi-do 13488 (KR)
(72) Inventor: Kim, Dae Kyung, 13488 Seongnam-si, Gyeonggi-do (KR); Hong, Kil Hwa, 13488 Seongnam-si, Gyeonggi-do (KR); Chang, Tae Kyun, 13488 Seongnam-si, Gyeonggi-do (KR); Kang, Sung Min, 13488 Seongnam-si, Gyeonggi-do (KR)
(74) Representative: Gulde & Partner

(57) **Abstract**

A multi-camera assembly is provided. The multi-camera assembly includes: a plurality of camera modules; a plurality of frame fans configured to support the camera modules, respectively, to be tiltable; a frame bottom configured to support the frame fans to be rotatable in a panning direction of the camera modules, the frame bottom having a cylindrical support portion provided in a central region; and connection portions positioned between the frame fans and the support portion, and configured to connect the frame fans and the support portion.

## Description

### CROSS-REFERENCE TO RELATED APPLICATION

This application claims priority from Korean Patent Application No. 10-2024-0033937 filed on March 11, 2024, in the Korean Intellectual Property Office, and all the benefits accruing therefrom, the contents of which in its entirety are herein incorporated by reference.

### BACKGROUND

### 1. Field

The present disclosure relates to a multi-camera assembly and, more specifically, to a multi-camera assembly in which frame fans supporting respective camera modules can be individually attached and detached by improving the assembly structure.

### 2. Description of the Related Art

In general, surveillance cameras for monitoring a specific area are equipped with a plurality of camera modules having pan/tilt/zoom movements to cover a wide area with a small number of devices and track objects exhibiting specific movements. In particular, among various types of surveillance cameras, dome cameras have been increasingly used because their circularly symmetric shape around the central axis facilitates pan/tilt/zoom movements and enables miniaturization.

Such surveillance cameras include a dome cover, which is a transparent optical exterior component configured to cover multiple cameras, and fans mounted inside the dome cover to direct air onto the inner surface of the dome cover, thereby preventing fogging or condensation. Specifically, a conventional dome camera is provided with a plurality of blower fans in the vicinity of multiple camera modules arranged along the circumferential direction of a housing, as well as multiple intake ports and exhaust ports.

The blower fans may be used to remove moisture generated due to the temperature difference between the interior and exterior of the dome camera or to cool down the camera modules or circuit boards that may overheat depending on the installation or usage environment.

Additionally, the dome cover includes a transparent panel that transmits reflected light from a subject to the camera modules and a transmission panel that transmits infrared rays emitted from an illumination module. Since the transparent panel and the transmission panel are made of different materials or formed in different shapes, they are separately manufactured and then assembled before being mounted on the housing.

However, in a conventional surveillance camera, frame fans are merely rotatably coupled to the frame bottom, meaning that removing a single frame fan that needs to be replaced requires the disassembly of multiple frame fans, which has been pointed out as an inconvenience.

### SUMMARY

An objective of the present disclosure is to provide a multi-camera assembly in which frame fans supporting respective camera modules can be individually attached and detached by improving the assembly structure.

The objectives of the present disclosure are not limited to those mentioned above, and other objectives not explicitly stated will be clearly understood by those skilled in the art based on the following description.

According to an aspect of the present disclosure, a multi-camera assembly includes: a plurality of camera modules; a plurality of frame fans configured to support the camera modules, respectively, to be tiltable; a frame bottom configured to support the frame fans to be rotatable in a panning direction of the camera modules, the frame bottom having a cylindrical support portion provided in a central region; and connection portions positioned between the frame fans and the support portion, and configured to connect the frame fans and the support portion.

Each of the connection portions may include a ring member configured to surround an outer circumferential surface of the support portion, and a first fastening member extending from one side of the ring member and coupled with a frame fan.

In the connection portions, a number of ring members corresponding to a number of frame fans may be arranged to overlap each other on the outer circumferential surface of the support portion.

The first fastening members of the connection portions may be arranged at different angles with respect to a central height direction of the support portion.

The connection portions may be coupled to the support portion at different heights based on heights at which the ring members are coupled on the support portion.

Each of the frame fans may include a coupling portion that is coupled to a corresponding connection portion, and side portions extending from either end of the coupling portion to face each other to form a tilting axis of a corresponding camera module.

The coupling portion may include a second fastening member arranged to face and be coupled with the first fastening member.

The coupling portion may further include a third fastening member arranged to partially overlap the second fastening member at a different height.

A state where the first and second fastening members are overlapped, each fastening members may be coupled to correspond to a rotational axis direction of the support portion.

The third fastening member may be exposed outside the second fastening member along the rotational axis direction of the support portion, and may include a fastening region coupled with fasteners without interfering with the second fastening member.

The coupling portion may be formed such that the second and third fastening members have a same height or thickness as the first fastening member.

The first fastening member may be selectively coupled to either an upper surface or a lower surface of the second fastening member or an upper surface or a lower surface of the third fastening member.

Regardless of a position where the first fastening member is coupled with the second fastening member or the third fastening member, heights at which the frame fans are positioned on the frame bottom may be the same.

The connection portion may include extension members extending from either side of the first fastening member along a rotational axis direction of the support portion.

The extension members may be arranged to interfere with other extension members arranged in the panning direction of the camera modules.

The extension members may be formed with inclined surfaces that narrow in spacing in a direction in which the coupling portion is coupled with the corresponding connection portion.

Both side end portions of the second or third fastening member may be chamfered to correspond to a slope of the inclined surfaces.

According to the aforementioned and other embodiments of the present disclosure, the following advantages are provided.

First, frame fans are rotatably supported on a support portion while also being individually detachable.

Second, by improving the assembly structure of the connection portion and a coupling portion, interference occurring during the assembly of each frame fan to the connection portion can be minimized.

Third, by providing an extension member on the connection portion, the transmission of impact to the camera modules caused by contact during panning rotation can be reduced.

It should be noted that the effects of the present disclosure are not limited to those described above, and other effects of the present disclosure will be apparent from the following description.

### BRIEF DESCRIPTION OF THE DRAWINGS

The following detailed description and the summary above will be better understood when read in conjunction with the accompanying drawings. The drawings illustrate preferred embodiments for purposes of example. However, it should be understood that the present application is not limited to the precise arrangements and means illustrated.
FIG. 1 is a perspective view illustrating a multi-camera assembly according to an embodiment of the present invention.
FIG. 2 is an exploded perspective view illustrating the multi-camera assembly of FIG. 1 in a disassembled state.
FIG. 3 is a cross-sectional view taken along line I-I' of the multi-camera assembly of FIG. 1.
FIG. 4 is a perspective view illustrating a connection portion of the multi-camera assembly of FIG. 3.
FIG. 5 is a perspective view illustrating a frame fan of the multi-camera assembly of FIG. 2.
FIG. 6 is a plan view illustrating the frame fan of FIG. 5.
FIG. 7 is a reference diagram illustrating a coupled state of frame fans and connection portions of the multi-camera assembly of FIG. 2.
FIG. 8 is a reference diagram illustrating a coupled state of the connection portions mounted on the support portion.

### DETAILED DESCRIPTION

Preferred embodiments of the present disclosure will hereinafter be described in detail with reference to the accompanying drawings. The advantages, features, and methods for achieving the same in the present disclosure will become apparent by referring to the embodiments described below along with the accompanying drawings. However, the present disclosure is not limited to the embodiments set forth below and may be implemented in various other forms. The following embodiments are provided to fully disclose the present disclosure and to fully convey the scope of the invention to those skilled in the art. The present disclosure is defined only by the scope of the claims. Throughout the specification, the same reference numerals denote the same components.

The present disclosure can undergo various modifications and have various embodiments, and specific embodiments will be illustrated and described in the drawings.

However, this is not intended to limit the present disclosure to such specific embodiments, and it should be understood to include all modifications, equivalents, and alternatives within the spirit and scope of the invention.

Terms including ordinal numbers such as first, second, etc., may be used to describe various components, but these components are not limited by these terms.

These terms are used only to distinguish one component from another.

For example, a second component can be named a first component without departing from the scope of the invention, and similarly, a first component can be named a second component.

The term "and/or" includes any combination of one or more of the associated listed items or any of the listed items individually.

When a component is said to be "connected to" or "coupled to" another component, it may be directly connected or coupled to the other component, or intervening components may be present.

Conversely, when a component is said to be "directly connected to" or "directly coupled to" another component, there are no intervening components.

The terms used in this application are for the purpose of describing particular embodiments only and are not intended to limit the invention.

Unless the context clearly indicates otherwise, the singular forms include the plural forms as well.

In this application, the terms "comprising" and "having" are intended to specify the presence of stated features, numbers, steps, operations, elements, components, or combinations thereof, but do not preclude the presence or addition of one or more other features, numbers, steps, operations, elements, components, or combinations thereof.

Embodiments will hereinafter be described with reference to the accompanying drawings, wherein the same or corresponding components, regardless of the drawing numbers, are assigned the same reference numbers, and redundant descriptions will be omitted.

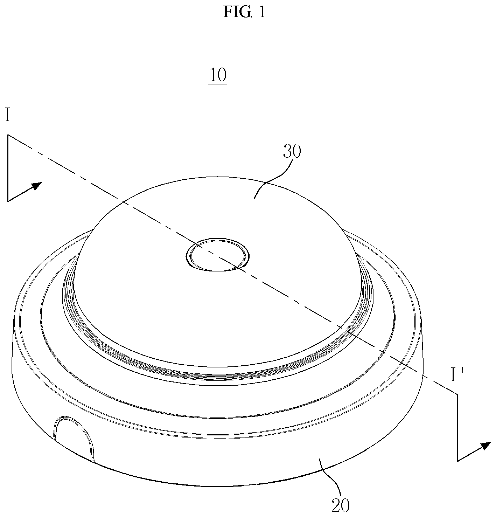

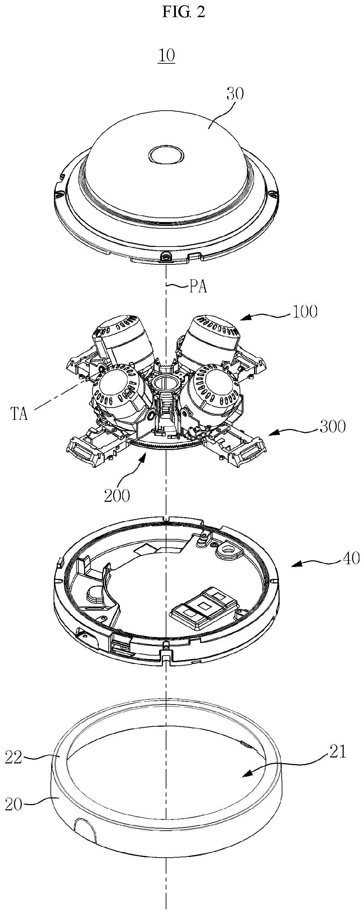

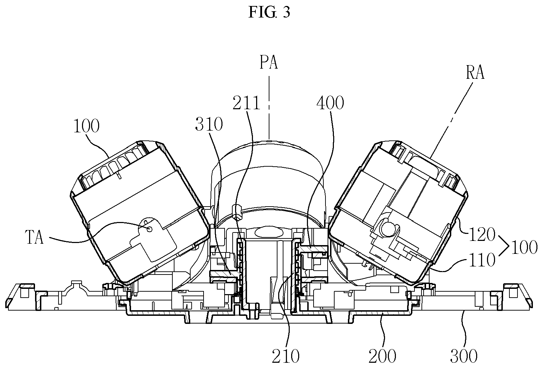

FIG. 1 is a perspective view illustrating a multi-camera assembly according to an embodiment of the present invention, FIG. 2 is an exploded perspective view illustrating the multi-camera assembly of FIG. 1 in a disassembled state, and FIG. 3 is a cross-sectional view taken along line I-I' of the multi-camera assembly of FIG. 1.

Referring to FIGS. 1 through 3, a multi-camera assembly 10 may include a housing 20, a plurality of camera modules 100, a dome cover 30, a frame bottom 200, frame fans 300, and connection portions 400.

In FIGS. 1 through 3, the dome cover 30 is illustrated as being positioned at the top of the multi-camera assembly 10, and when the multi-camera assembly 10 is installed on a mounting surface, the dome cover 30 may be positioned facing downward. Accordingly, the upper and lower directional designations may be reversed depending on the installation position.

First, the housing 20 may be formed to cover the perimeter of the multi-camera assembly 10 along a substantially circumferential direction. The housing 20 may have a predetermined height, and form an accommodation space 21 inside. The housing 20 may be bent inward along the circumferential direction, forming a step 22 on one side. The outer end of the dome cover 30 and a support frame 40 may be assembled on the step 22, covering all of the camera modules 100.

The support frame 40 may be coupled within the accommodation space 21 of the housing 20. A circuit board and the like may be mounted on the support frame 40.

The frame bottom 200 may be fixed on the support frame 40. The frame bottom 200 may be positioned inside the accommodation space 21.

In addition, illumination modules may be arranged along the outer circumferential edge of the frame bottom 200.

A cylindrical support portion 210 may be provided at the center of the frame bottom 200. The support portion 210 may be installed to protrude upward from the center of the frame bottom 200. A flange member 211 may be formed at an upper part of the support portion 210 to support a coupling portion joined to the support portion 210, preventing the coupling portion from being detached. Further, the support portion 210 may be positioned between the camera modules 100, at the center of the frame bottom 200, while being centered around a panning axis PA. The support portion 210 may be fastened to the central region of the frame bottom 200 through a fastener.

The frame fans 300 may be arranged on the frame bottom 200 to support a plurality of camera modules 100, enabling the camera modules 100 to tilt and pan on the frame bottom 200. Illumination modules (not illustrated) may be mounted on the outer front ends of the frame fans 300.

Here, the camera modules 100 may perform tilting/panning/rotation movements.

Tilting refers to the function in which the camera modules 100 rotate upward/downward around a tilting axis TA, which is formed in a horizontal direction on the frame fans 300, to adjust their inclination. For example, the tilting angle may range from 0 to 90 degrees.

Panning refers to the function in which the camera modules 100, together with the frame fans 300, rotate clockwise or counterclockwise around the panning axis PA, which is formed in a vertical direction to correspond to the center of the frame bottom 200. For example, the panning angle may range from 0 to 360 degrees.

Rotation refers to the function in which the camera modules 100 rotate on the frame fans 300. For example, the rotation angle may range from 0 to 90 degrees.

For example, as illustrated in FIGS. 1 through 3, four camera modules 100 and four illumination modules 50 may be provided along with four frame fans 300 that mount the four camera modules 100, respectively, but the present disclosure is not limited thereto. That is, the numbers of camera modules 100 and frame fans 300 may be adjusted as needed.

Accordingly, each camera module 100 may perform panning around the panning axis PA, moving closer to or farther from an adjacent camera module on one side or another camera module on the opposite side.

Each of the camera modules 100 may include a frame tilt 110 and a cover front 120.

The frame tilts 110 of the camera modules 100 may be coupled to the frame fans 300 to enable tilting around the tilting axis TA.

The cover fronts 120 of the camera modules 100 may be positioned on the frame tilts 110. In this case, the cover fronts 120 may be coupled onto the frame tilts 110 to be rotatable relative to the frame tilts 110.

The camera modules 100 may rotate around a rotation axis RA of the cover front 120. For example, the function of adjusting image inversion based on the shooting direction or correcting horizontal alignment may be provided through the rotation of the cover fronts 120 when the installation of the multi-camera assembly 10 is complete.

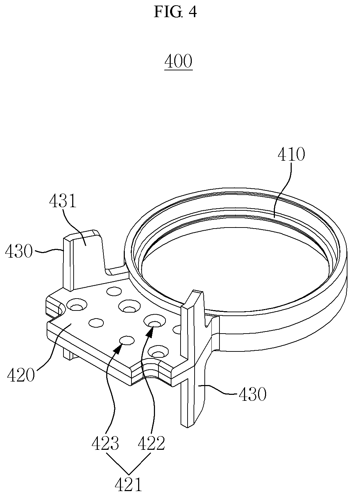

FIG. 4 is a perspective view illustrating a connection portion of the multi-camera assembly of FIG. 3.

Referring to FIG. 4, a connection portion 400 may include a ring member 410, a first fastening member 420, and extension members 430.

First, the ring member 410 may be coupled to surround the outer circumferential surface of the support portion 210. The ring member 410 may have a hollow circular frame structure at one cross-section and may be arranged to be rotatable on the support portion 210. Accordingly, as illustrated in FIG. 3, a plurality of ring members 410 may be coupled to overlap each other along the panning axis PA, which corresponds to the height direction of the support portion 210.

Additionally, the first fastening member 420 may protrude in the circumferential direction from the ring member 410, and a frame fan 300 may be coupled to the first fastening member 420. In this case, the first fastening member 420 may be positioned on the same plane as the ring member 410 in the height direction of the support portion 210. A plurality of first fastening members 420 may be arranged at different angles from their respective ring members 410 with respect to the central height direction of the support portion 210 of FIG. 2. That is, preferably, the plurality of first fastening members 420 may be arranged so as not to overlap each other along the panning axis PA of the support portion 210.

Further, the extension members 430 may extend to protrude from both sides of the first fastening member 420 along the panning axis PA of the support portion 210. Since the first fastening members 420 of the connection portions 400 are arranged so as not to overlap each other along the panning axis PA of the support portion 210, when the connection portions 400 rotate along the panning direction on the support portion 210, the extension members 430 provided on one of the first fastening members 420 may come into contact with the extension members 430 provided on another first fastening member 420. Accordingly, when two connection portions 400 rotate closer in the panning direction, their panning rotation may be restricted by interference between the extension members 430. This also prevents direct collisions between frame fans 300, ensuring impact is not transmitted to the camera modules 100.

Also, the extension members 430 may be arranged parallel to the circumferential direction of the ring member 410. Accordingly, the extension members 430 positioned on either side of one first fastening member 420 may be arranged to face the center of the support portion 210, and inclined surfaces 431 facing the center of the support portion 210 may be arranged at either end of the first fastening member 420. The inclined surfaces 431 may be formed to gradually narrow in spacing in the coupling direction of the frame fan 300 to the connection portion 400. When one connection portion 400 pans, its extension members 430 may face and come into contact with the extension members 430 of another adjacent connection portion 400.

Additionally, a plurality of fastening holes 421 may be formed along the circumferential direction of the ring member 410 on the first fastening member 420. The fastening holes 421 may be arranged in separate regions along different radii in the circumferential direction of the ring member 410. For example, the fastening holes 421 of the first fastening member 420 may include first fastening holes 422 arranged along a first radius closer to the inside of the ring member 410 and second fastening holes 423 arranged along a second radius further from the inside of the ring member 410. Additional details regarding the fastening holes 421 will be described later.

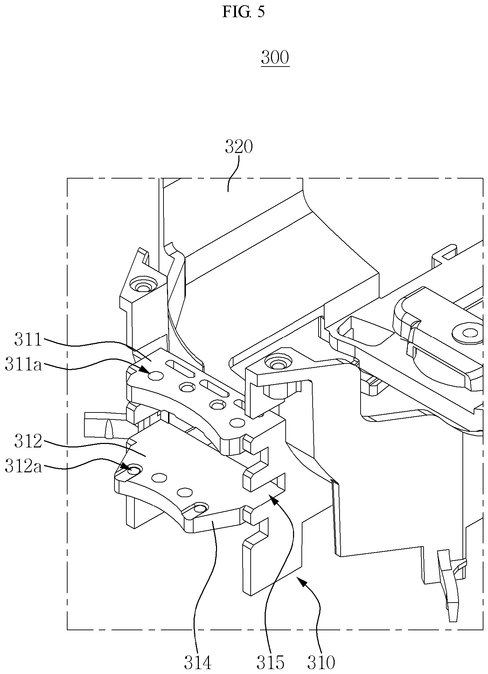

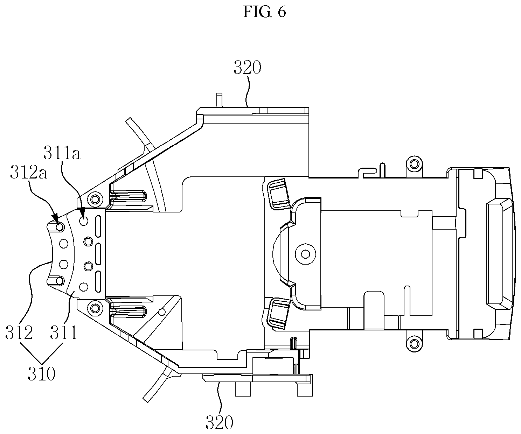

FIG. 5 is a perspective view illustrating a frame fan of the multi-camera assembly of FIG. 2, and FIG. 6 is a plan view illustrating the frame fan of FIG. 5.

Referring to FIGS. 5 and 6, a frame fan 300 may include a coupling portion 310 and side portions 320.

First, the coupling portion 310 may be arranged to face the support portion 210 from the frame fan 300 and may be fastened onto a connection portion 400.

The coupling portion 310 may include a second fastening member 311 and a third fastening member 312.

The coupling portion 310 may be arranged along the panning axis PA of the support portion 210 and positioned on the inner side of the frame fan 300. Additionally, one of the second fastening member 311 or the third fastening member 312 may be selectively coupled to the first fastening member 420.

On the coupling portion 310, the second fastening member 311 may be positioned higher than the third fastening member 312 along the panning axis PA of the support portion 210. The coupling portion 310 may be formed so that the heights (or thicknesses) of the second and third fastening members 311 and 312 are the same as the height (or thickness) of the first fastening member 420.

Here, with respect to the direction of the panning axis PA of the support portion 210, fourth fastening holes 312a may be formed on the third fastening member 312 at positions not overlapping third fastening holes 311a on the second fastening member 311. A fastener (e.g., a screw or a bolt) may be inserted into each of the third or fourth fastening holes 311a or 312a to penetrate the first fastening member 420 and either the second or third fastening member 311 or 312 when the first fastening member 420 and either the second or third fastening member 311 or 312 are positioned to overlap and face each other.

The side portions 320 may extend from either end of the coupling portion 310 to face each other and support a camera module 100 to form the tilting axis TA of the camera module 100.

Chamfered sections 314 may be formed on at least one side end portion of each of the second and third fastening members 311 and 312 to correspond to the slope of the inclined surfaces 431 of the connection portion 400.

Additionally, the coupling portion 310 may have its front end facing the support portion 210 formed as a curved surface corresponding to the outer circumferential surface of the ring member 410 of the connection portion 400, and may thereby be spaced apart from the ring member 410.

Furthermore, the coupling portion 310 may have a plurality of grooves 315 formed between the second and third fastening members 311 and 312, into which the first fastening member 420 is partially inserted when the connection portion 400 is coupled with the coupling portion 310.

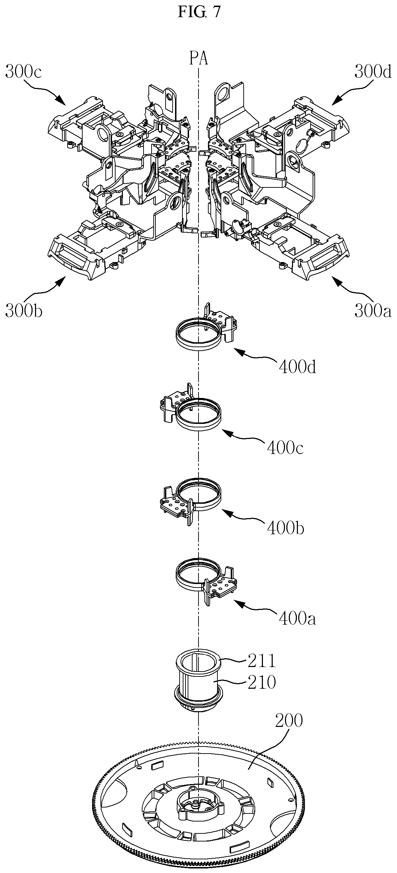

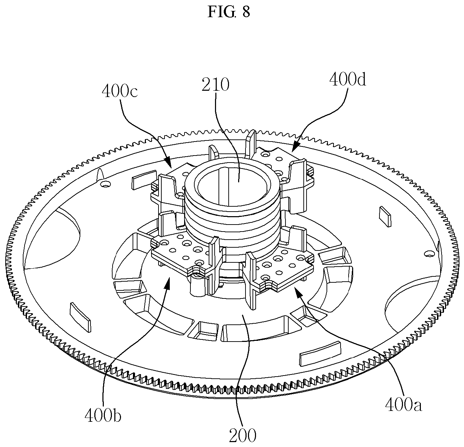

FIG. 7 is a reference diagram illustrating a coupled state of the frame fans and connection portions of the multi-camera assembly of FIG. 2, and FIG. 8 is a reference diagram illustrating a coupled state of the connection portions mounted on the support portion.

Referring to FIGS. 7 and 8, the second and third fastening members 311 and 312 of each frame fan 300 may be arranged to face or overlap with the first fastening member 420 of each connection portion 400. The coupling portion 310 may be coupled such that either the second fastening member 311 or the third fastening member 312 may be coupled to the first fastening member 420.

For example, the second fastening member 311 may include third fastening holes 311a that correspond to the second radius of the second fastening holes 423 of the first fastening member 420. Additionally, the third fastening member 312 may include fourth fastening holes 312a that correspond to the first radius of the first fastening holes 422 of the first fastening member 420.

That is, the third fastening holes 311a may be formed in a row along the second radius from the center of the support portion 210, on the second fastening member 311, and the fourth fastening holes 312a may be formed in a row along the first radius from the center of the support portion 210, on the third fastening member 312.

As illustrated in FIG. 6, the fourth fastening holes 312a may be exposed outside the second fastening member 311 from a planar perspective. In other words, the third fastening member 312 may be exposed outside the second fastening member 311, and may include a fastening region that is relatively closer than the second fastening member 311 to the ring member 410. Accordingly, when fasteners are coupled into the fourth fastening holes 312a in the fastening region of the third fastening member 312, they may be inserted not to interfere with the second fastening member 311. The coupling direction of the fasteners may correspond to the direction of the panning axis PA of the support portion 210.

Through this, even if one of the second or third fastening member 311 or 312 is coupled with the first fastening member 420, the frame fan 300 can be selectively attached or detached on the respective connection portion 400, thereby facilitating maintenance.

For example, a first frame fan 300a may be coupled to a first connection portion 400a, which is assembled at a first level on the support portion 210, and a second frame fan 300b may be coupled to a second connection portion 400b, which is assembled at a second level on the support portion 210, above the first connection portion 400a on the support portion 210. Similarly, a third frame fan 300c may be coupled to a third connection portion 400c at a third level on the support portion 210, and a fourth frame fan 300d may be coupled to a fourth connection portion 400d at a fourth level on the support portion 210. The heights at which the first through fourth frame fans 300a through 300d are coupled to the first through fourth connection portions 400a through 400d, respectively, may differ, but the heights of the first through fourth frame fans 300a through 300d from the frame bottom 200 may all be the same.

The first fastening member 420 of the first connection portion 400a and the third fastening member 312 of the first frame fan 300a may be fastened by coupling fasteners into fourth fastening holes 312a in the central region, the first fastening member 420 of the second connection portion 400b and the third fastening member 312 of the second frame fan 300b may be fastened by coupling fasteners into fourth fastening holes 312a in the outer region, the first fastening member 420 of the third connection portion 400c and the second fastening member 311 of the third frame fan 300c may be fastened by coupling fasteners into third fastening holes 311a in the outer region, and the first fastening member 420 of the fourth connection portion 400d and the second fastening member 311 of the fourth frame fan 300d may be fastened by coupling fasteners into third fastening holes 311a in the central region. That is, the first and second connection portions 400a and 400b, which are coupled at the first and second levels on the support portion 210, are fastened through the fourth fastening holes 312a of the third fastening member 312, which are exposed outside the second fastening members 311 of the first and second frame fans 300a and 300b, and the third and fourth connection portions 400c and 400d, which are coupled at the third and fourth levels on the support portion 210, are fastened through the third fastening holes 311a of the second fastening members 311 of the third and fourth frame fans 300c and 300d, as illustrated in FIG. 5. In this advantageous manner, the first through fourth frame fans 300a through 300d can be conveniently and reliably attached and detached selectively and individually, thus simplifying maintenance.

The first fastening members 420 may be fastened to the upper or lower surfaces of the second fastening members 311 via fasteners. Additionally, the first fastening members 420 may also be selectively fastened to the upper or lower surfaces of the third fastening members 312 via fasteners.

According to the multi-camera assembly of the present embodiment, the frame fans are rotatably supported on the support portion while also being individually detachable. By improving the assembly structure of the connection portions and the coupling portions, interference occurring during the assembly of each of the frame fans to the corresponding connection portions can be minimized. Furthermore, by providing extension members on each connection portion, the transmission of impact to the camera modules due to contact during panning can be reduced.

While the technical idea of the present disclosure has been illustrated and described with reference to specific embodiments, it is not limited to the specific configurations and operations described above. Various modifications may be implemented without departing from the scope of the present disclosure. Therefore, such modifications should be considered to fall within the scope of the present disclosure, and the scope of the present disclosure should be determined based on the claims described below.

## Claims

1. A multi-camera assembly (10) comprising:
a plurality of camera modules (100);
a plurality of frame fans (300, 300a, 300b, 300c, 300d) configured to support the camera modules (100), respectively, to be tiltable;
a frame bottom (200) configured to support the frame fans (300, 300a, 300b, 300c, 300d) to be rotatable in a panning direction of the camera modules (100), the frame bottom (200) having a cylindrical support portion (210) provided in a central region; and
connection portions (400, 400a, 400b, 400c, 400d) positioned between the frame fans (300, 300a, 300b, 300c, 300d) and the support portion (210), and configured to connect the frame fans (300, 300a, 300b, 300c, 300d) and the support portion (210).

2. The multi-camera assembly (10) of claim 1, wherein each of the connection portions (400, 400a) includes a ring member (410) configured to surround an outer circumferential surface of the support portion (210), and a first fastening member (420) extending from one side of the ring member (410) and coupled with a frame fan (300, 300a, 300b, 300c, 300d).

3. The multi-camera assembly (10) of claim 2, wherein in the connection portions (400, 400a, 400b, 400c, 400d), a number of ring members (410) corresponding to a number of frame fans (300, 300a, 300b, 300c, 300d) are arranged to overlap each other on the outer circumferential surface of the support portion (210).

4. The multi-camera assembly (10) of claim 3, wherein the first fastening members (420) of the connection portions (400, 400a, 400b, 400c, 400d) are arranged at different angles with respect to a central height direction of the support portion (210).

5. The multi-camera assembly (10) of claims 2 to 4, wherein the connection portions (400, 400a, 400b, 400c, 400d) are coupled to the support portion (210) at different heights based on heights at which the ring members (410) are coupled on the support portion (210).

6. The multi-camera assembly (10) of claims 2 to 5, wherein each of the frame fans (300, 300a, 300b, 300c, 300d) includes a coupling portion (310) that is coupled to a connection portion (400, 400a, 400b, 400c, 400d), and side portions (320) extending from either end of the coupling portion (310) to face each other to form a tilting axis of a corresponding camera module (100).

7. The multi-camera assembly (10) of claim 6, wherein the coupling portion (310) includes a second fastening member (311) arranged to face and be coupled with the first fastening member (420).

8. The multi-camera assembly (10) of claim 7, wherein the coupling portion (310) further includes a third fastening member (312) arranged to partially overlap the second fastening member (311) at a different height.

9. The multi-camera assembly (10) of claim 7 or 8, wherein in a state where the first and second fastening members (311) are overlapped, each fastening members are coupled to correspond to a rotational axis direction of the support portion (210).

10. The multi-camera assembly (10) of claim 9, wherein the third fastening member (312) is exposed outside the second fastening member (311) along the rotational axis direction of the support portion (210), and includes a fastening region coupled with fasteners without interfering with the second fastening member (311).

11. The multi-camera assembly (10) of claims 8 to 10, wherein the coupling portion (310) is formed such that the second and third fastening members (311, 312) have a same height or thickness as the first fastening member (420).

12. The multi-camera assembly (10) of claim 11, wherein the first fastening member (420) is selectively coupled to either an upper surface or a lower surface of the second fastening member (311) or an upper surface or a lower surface of the third fastening member (312).

13. The multi-camera assembly (10) of claim 11, wherein regardless of a position where the first fastening member (420) is coupled with the second fastening member (311) or the third fastening member (312), heights at which the frame fans (300, 300a, 300b, 300c, 300d) are positioned on the frame bottom (200) are the same.

14. The multi-camera assembly (10) of claims 8 to 13, wherein the connection portion (400, 400a, 400b, 400c, 400d) includes extension members (430) extending from either side of the first fastening member (420) along a rotational axis direction of the support portion (210),
wherein the extension members (430) are arranged to interfere with other extension members (430) arranged in the panning direction of the camera modules (100)
wherein the extension members (430) are formed with inclined surfaces (431) that narrow in spacing in a direction in which the coupling portion (310) is coupled with the corresponding connection portion (400, 400a, 400b, 400c, 400d) and/or wherein both side end portions of the second or third fastening member (312) are chamfered to correspond to a slope of the inclined surfaces (431).

15. The multi-camera assembly (10) of claims 1 to 14, wherein the frame fans (300, 300a, 300b, 300c, 300d) are rotatably supported on the support portion (210) while also being individually detachable.
